# EUROPEAN PATENT APPLICATION

(11) **EP 1 176 081 A1**
(43) Date of publication of application: **30.01.2002**
(21) Application number: 00935611.4
(22) Date of filing: 09.06.2000
(51) Int. Cl.: B62D 1/16, B23P 15/00, B23B 5/12

(54) **HOLED CYLINDRICAL BODY AND METHOD OF WORK THE CYLINDRICAL BODY**

(30) Priority: 02.03.2000 JP 2000057737
(71) Applicant: KABUSHIKI KAISHA SOMIC ISHIKAWA, Sumida-ku, Tokyo 130-0004 (JP)
(72) Inventor: TAKEUCHI, Shigeo, KK Somic Ishikawa Hamamatsu-kojo, Hamamatsu-shi, Shizuoka 435-8560 (JP)
(74) Representative: Kemp, Paul Geoffrey
(86) International application number: JP0003759
(87) International publication number: WO0164498

(57) **Abstract**

Nearly the entire cylindrical wall of a cylindrical workpiece (41) is positioned and supported. A through hole (31) is formed by lowering a press jig (45) that comprises a prismatic penetration processing portion (48) and flange portions (49) respectively projecting from two opposing sides of the penetration processing portion (48). Bent portions (32) are formed by bending inward two opposing edges of the through hole (31), i.e. the edges that extend in such a direction as to intersect the circumferential direction of the cylindrical workpiece (41), by means of the two flange portions (49). Each bent portion (32) has on its outer surface a slanted face (33) which extends along the corresponding edge of the through hole (31) as an integral, continuous body therewith and is located such that the distance between the slanted face (33) and the center of the cylindrical workpiece (41) is shorter than the radius of the cylindrical workpiece (41). With a cutting blade (35) brought into contact with the cylindrical outer surface of the cylindrical workpiece (41), finish cutting of the cylindrical outer surface is performed so as to form a steering column tube (5). The invention is capable of protecting the cutting, blade (35) from otherwise possible damage by preventing it from abutting against the edge of the through hole (31) facing towards the approaching cutting blade (35). The invention is also capable of improving the manufacturability of the steering column tube (5) by preventing formation of a burr along the opposite edge of the through hole (31), i.e. the edge facing away from the cutting blade (35).

## Description

### TECHNICAL FIELD

The present invention relates to a cylindrical member having a hole that has a cylindrical outer surface in which a hole is formed. The invention also relates to a method of processing such a cylindrical member having a hole.

### BACKGROUND OF THE INVENTION

Normally, a steering column, which is a part of the steering mechanism of an automobile, has a through hole so that when the ignition key is removed, a lock bar passes through the through hole and catches the main shaft connected to the steering wheel so that the steering wheel is prevented from turning. Such a through hole is typically formed by stamping a hole in a cylindrical workpiece by press working, which permits the easy formation of a hole with a single action.

When a through hole is formed by press working, the cylindrical workpiece becomes inevitably deformed such that the cross section of its outer surface slightly distorts into an oval shape. Therefore, after the pressing process, the cylindrical workpiece has to undergo a finishing cutting process so as to have a cylindrical outer surface.

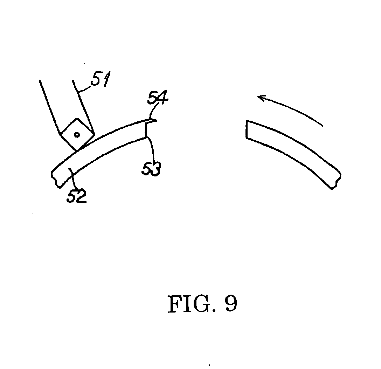

During the cutting finishing, however, a burr 54 is prone to being formed along one of the edges of the through hole 53 as shown in Fig. 9, i.e. the edge facing away from a cutting blade 51 that is moving either actively or passively along the cylindrical workpiece 52, depending on whether the blade 51 actually moves along the cylindrical workpiece 52 or the cylindrical workpiece 52 rotates in the state where it is in contact with the blade 51. As such a burr 54 often closes off a part of the through hole 53 and causes various troubles, including impairing proper penetrating action of the lock bar, a special work is required to remove the burr 54. For this reason, using the conventional pressing process inhibits improvements in manufacturability. The conventional process presents another problem in that there is the possibility of damage to the cutting blade 51 resulting from the cutting blade 51 abutting against one of the edges of the through hole 53, i.e. the edge facing towards the approaching cutting blade 51 that is approaching towards the through hole 53.

In order to solve the above problems, an object of the present invention is to provide a cylindrical member having a hole which has improved manufacturability in that its cylindrical outer surface is easy to undergo cutting work even if a recess or a through hole is formed in the cylindrical outer surface. Another object of the present invention is to provide a processing method for such a cylindrical member having a hole.

### DISCLOSURE OF THE INVENTION

A cylindrical member having a hole according to the present invention includes a body portion having a generally cylindrical outer surface which is subject to cutting work by a cutting blade, a hole formed in the cylindrical outer surface of said body portion, and one or more slanted faces formed on the cylindrical outer surface of the body portion, each of which slanted surfaces is integrally formed with one of the hole edges extending in such a direction as to intersect the circumferential direction and facing either toward or away from the approaching cutting blade, and is located such that the distance between the slanted face and the center of said body portion is shorter than the radius of the body portion. As a result of inclusion of one or more slanted faces, each of which slanted surfaces is integrally formed with one of the hole edges extending in such a direction as to intersect the circumferential direction and facing either toward or away from the approaching cutting blade, and is located such that the distance between the slanted face and the center of said body portion is shorter than the radius of the body portion, the following benefits are presented: providing a slanted face integrally along the edge of the hole facing the approaching cutting blade prevents the cutting blade from abutting against the edge of the hole which faces towards the approaching cutting blade, thereby protecting the cutting blade from otherwise possible damage, while providing a slanted face integrally along the edge that faces away from the cutting blade prevents formation of a burr along said edge, thereby eliminating the need of processing work to remove a burr and consequently improving the manufacturability of the cylindrical member.

A cylindrical member having a hole according to another feature of the present invention is in a generally cylindrical shape and has a cylindrical outer surface which is provided with a through hole formed therein and is subject to cutting work by a cutting blade, wherein at least one of the through hole edges that extend in such a direction as to intersect the circumferential direction and face either toward or away from the approaching cutting blade, is bent inward. As a result of bending inward at least one of the through hole edges that extend in such a direction as to intersect the circumferential direction and face either toward or away from the approaching cutting blade, the following benefits are presented: bending the edge of the through hole facing the approaching cutting blade prevents the cutting blade from abutting against said edge of the through hole, thereby protecting the cutting blade from otherwise possible damage, while bending the edge that faces away from the cutting blade prevents formation of a burr along said edge, thereby eliminating the need of processing work to remove a burr and consequently improving the manufacturability of the cylindrical member.

A method of processing a cylindrical member having a hole according to the present invention calls for forming a hole in the outer surface of a cylindrical workpiece, which surface has a generally cylindrical shape, forming at least one slanted face on said outer surface of the cylindrical workpiece in which said hole is formed, said slanted face being formed such that it is an integral body with one of the hole edges which extend in such a direction as to intersect the circumferential direction and that the distance between the slanted face and the center axis of said cylindrical workpiece is shorter than the radius of the cylindrical workpiece, and, after formation of said slanted face or slanted faces, performing cutting work of the cylindrical outer surface of the cylindrical workpiece in such a manner that a cutting blade moves either actively along the cylindrical outer surface of the cylindrical workpiece or passively as a result of rotation of the cylindrical workpiece. In other words, after forming at least one slanted face on the generally cylindrical outer surface of the cylindrical workpiece in which a hole is formed, said slanted face being provided such that it is integrally formed along one of the hole edges which extend in such a direction as to intersect the circumferential direction and that the distance between the slanted face and the center axis of said cylindrical workpiece is shorter than the radius of the cylindrical workpiece, cutting work of the cylindrical outer surface of the cylindrical workpiece is performed in such a manner that a cutting blade moves either actively along the cylindrical outer surface of the cylindrical workpiece or passively as a result of rotation of the cylindrical workpiece. Therefore, forming a slanted face integrally along the hole edge facing toward the approaching cutting blade prevents the cutting blade from abutting against said edge, thereby protecting the cutting blade from otherwise possible damage, while forming a slanted face integrally along the edge that faces away from the cutting blade prevents formation of a burr along said edge, thereby eliminating the need of processing work to remove a burr and consequently improving the manufacturability of the cylindrical member.

A method of processing a cylindrical member having a hole according to yet another feature of the present invention calls for forming a through hole through the wall of a generally cylindrical workpiece, bending inward at least one of the through hole edges that extend in such a direction as to intersect the circumferential direction and face either toward or away from the approaching cutting blade, and performing cutting work of the cylindrical outer surface of the cylindrical workpiece, in which said through hole having at least one of its edges bent inward is formed, said cutting work performed in such a manner that a cutting blade moves either actively along the cylindrical outer surface of the cylindrical workpiece or passively as a result of rotation of the cylindrical workpiece. In other words, after bending inward at least one of the edges that are edges of the through hole formed through the wall of the cylindrical workpiece and extend in such a direction as to intersect the circumferential direction, cutting work is performed in such a manner that a cutting blade moves either actively along the cylindrical outer surface of the cylindrical workpiece or passively as a result of rotation of the cylindrical workpiece. Therefore, bending the through hole edge that faces the approaching cutting blade prevents the cutting blade from abutting against said edge, thereby protecting the cutting blade from otherwise possible damage, while bending the edge that faces away from the cutting blade prevents formation of a burr along said edge, thereby eliminating the need of processing work to remove a burr and consequently improving the manufacturability of the cylindrical member.

### BRIEF DESCRIPTION OF THE DRAWINGS

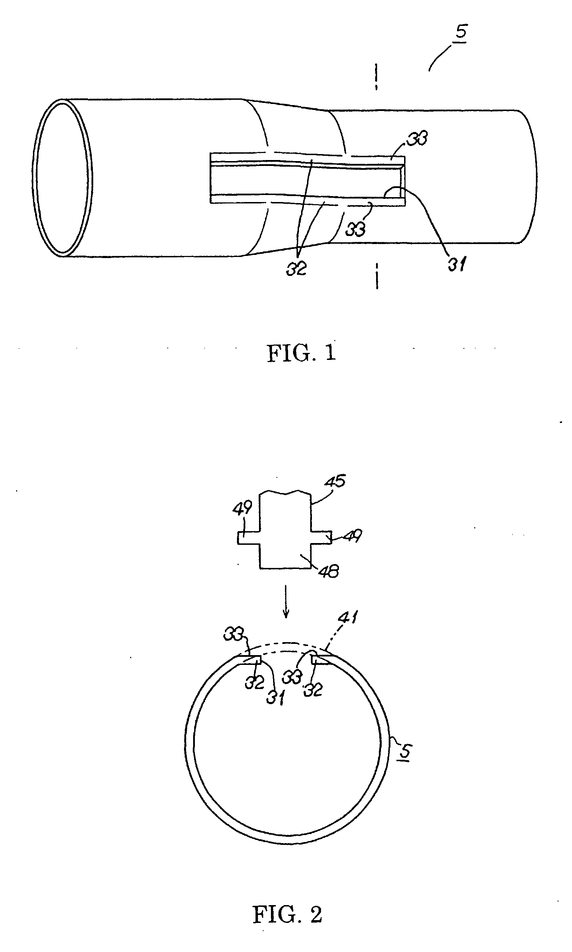

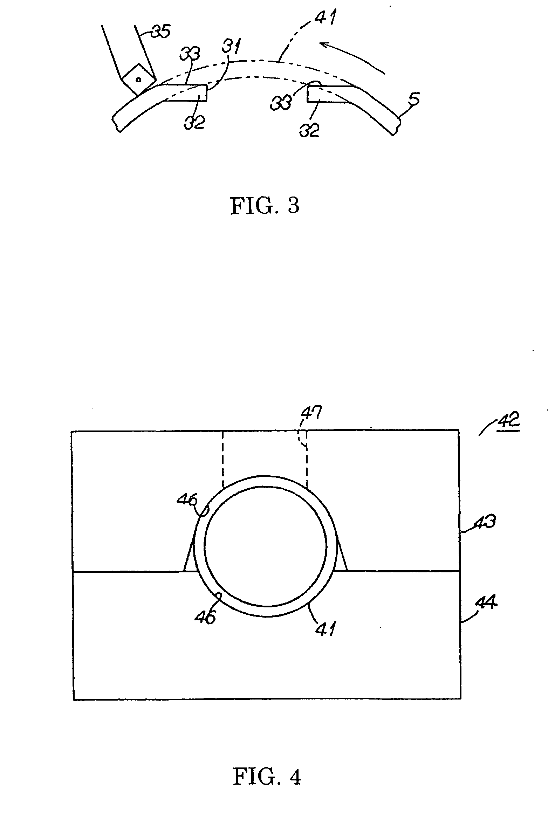

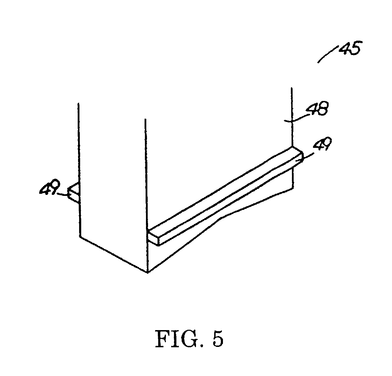

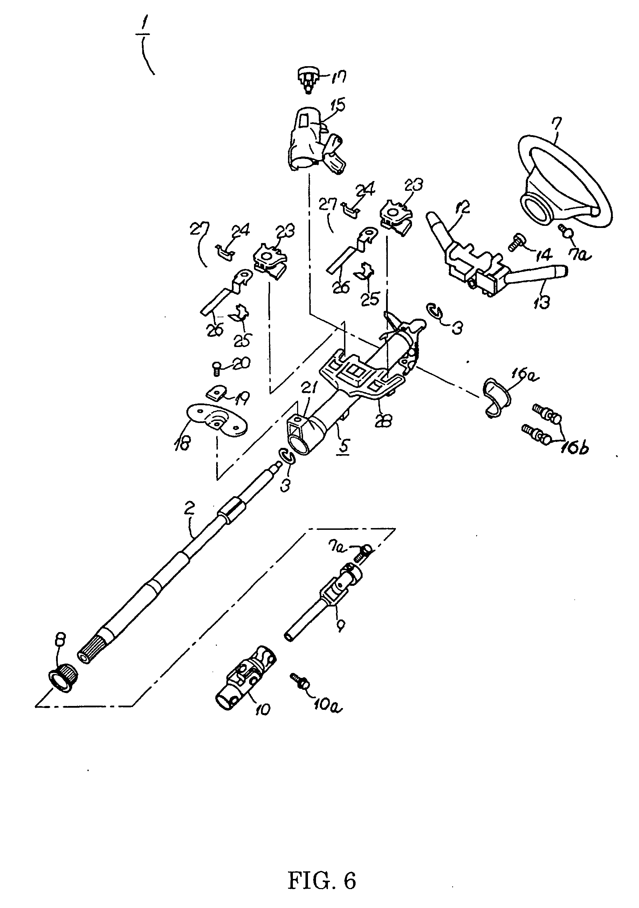

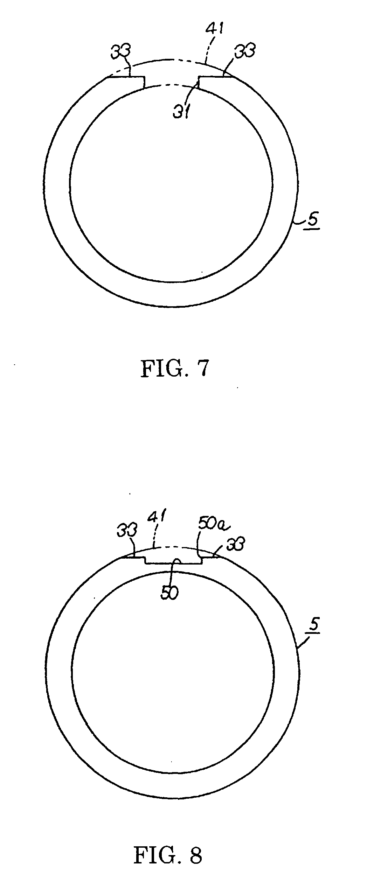

Fig. 1 is a perspective of a part of a steering column tube for illustrating a cylindrical member having a hole according to an embodiment of the present invention; Fig. 2 is a sectional view showing how a bent portion is formed in a cylindrical workpiece in the course of processing said steering column tube; Fig. 3 is a sectional view showing how finish cutting of the cylindrical workpiece is performed in the course of processing said steering column tube; Fig. 4 is an end view for explaining processing of said steering column tube, wherein the cylindrical workpiece is shown in the state where it is set in a processing machine; Fig. 5 is a perspective of a part of a press jig of the processing machine used for processing said steering column tube; Fig. 6 is an exploded perspective of a steering structure that includes said steering column tube; Fig. 7 is a sectional view of a steering column tube for illustrating a cylindrical member having a hole according to another embodiment of the present invention; Fig. 8 is a sectional view of a steering column tube for illustrating a cylindrical member having a hole according to yet another embodiment of the present invention; and Fig 9 is a sectional view showing how finish cutting of a cylindrical workpiece is performed according to a conventional production method.

### PREFERRED EMBODIMENT OF THE INVENTION

Next, a cylindrical member having a hole according to an embodiment of the present invention is explained hereunder, referring to Figs. 1 through 6.

Referring to Fig. 6, numeral 1 denotes a steering structure that constitutes a steering mechanism. The steering structure 1 includes a steering main shaft 2 and a steering column tube 5, which is a cylindrical member having a hole. The steering main shaft 2 is inserted through the steering column tube 5, with a pair of snap rings 3,3 respectively fitted around the two opposing ends of the steering main shaft 2. The steering main shaft 2 is thus rotatably supported in the main body of an automobile by the steering column tube 5.

A steering wheel 7 is integrally fixed to an end of the steering main shaft 2 with a mounting bolt 7a or by other appropriate means. A bush 8 is integrally fixed to the other end of the steering main shaft 2. An intermediate shaft 9 is integrally fixed to said bush 8 with an attaching bolt 9a or by other appropriate means. A sliding yoke 10 is integrally fixed to said intermediate shaft 9 with a connecting bolt 10a or by other appropriate means. The sliding yoke 10 is adapted to be connected to a gear box for moving a tie rod, which is connected to the wheels (not shown in the drawings).

A signal switch 12 for flashing the turning signal lamps (not shown) and a wiper switch 13 for operating the windshield wipers (not shown) are fixed to the cylindrical outer surface of the steering column tube 5, near the end where the steering wheel 7 is located, with a fixing bolt 14 or by other appropriate means. A column bracket 15 is attached to the cylindrical outer surface of the same end portion of the steering column tube 5 by means of a steering column clamp upper 16a and bolts 16b. The column bracket 15 is provided with a lock mechanism including a lock cylinder 17, into which an ignition key (not shown) will removably be inserted. The lock mechanism is designed such that when the ignition key is removed, a lock bar (not shown) is projected and becomes engaged with the steering main shaft 2, thereby preventing the steering main shaft 2 from rotating.

Provided on the cylindrical outer surface of the portion near the other end of the steering column tube 5 is a bridge 21, to which a support 18 used for mounting the steering column tube 5 on the automobile body will be attached with a nut 20 or by other appropriate means, with an attachment 19 disposed between the support 18 and the nut 20. A shock absorber mounting portion 28, on which a shock absorbing mechanism 27 will be disposed, is provided on the cylindrical outer surface of the steering column tube 5, at the middle of the steering column tube 5. Said shock absorbing mechanism 27 comprises capsules 23,23, pins 24,24, guides 25,25 and blades 26,26 and is so designed as to absorb the shock by becoming deformed or damaged should a great external force be applied to the steering wheel 7 in the axial direction.

A through hole 31 is formed in the steering column tube 5 by press working. As shown in Figs. 1 and 2, the through hole 31 is a narrow, rectangular aperture which is elongated in the axial direction and permits the lock bar of the lock mechanism to be inserted therethrough. The steering column tube 5 is also provided with bent portions 32,32, which are respectively formed by bending inward the two longer edges of the through hole 31, i.e. the edges that extend in such a direction as to intersect the circumferential direction. Each bent portion 32 has on its outer surface a slanted face 33, with the distance between each slanted face 33 and the center of the steering column tube 5 being shorter than the radius of the steering column tube 5. As shown in Fig. 3, the outer surface of the steering column tube 5 undergoes finish cutting by using a cutting machine that has a cutting blade 35.

Next, how to process the steering column tube of the embodiment described above is explained hereunder, referring to the relevant drawings.

First, a cylindrical workpiece 41 which is the material for the steering column tube 5 and will become the body portion of the steering column tube 5 is set in a processing machine 42 as shown in Fig. 4. The processing machine 42 has a pair of dies, i.e. an upper die 43 and a lower die 44 that can be connected together or separated from each other as needed, and a press jig 45 that is shown in Figs. 2 and 5 and used to form the through hole 31. Catching grooves 46,46 are respectively formed in the two opposing surfaces of the upper die 43 and the lower die 44 so that the two catching grooves 46,46 face towards each other. Each catching groove 46 is capable of receiving approximately half of the cylindrical wall of the cylindrical workpiece 41 so that nearly the entire cylindrical wall of the cylindrical workpiece 41 is supported by the upper die 43 and the lower die 44. Furthermore, an insertion hole 47 that permits the press jig 45 to be inserted therethrough is formed in the upper die 43. The press jig 45 has a penetration processing portion 48 having a rectangular column-like shape. In order to reduce the load that will be applied to the cylindrical workpiece 41 when the through hole 31 is formed, the end of the penetration processing portion 48 is angled in the shape of an inverted V when viewed from the side. The press jig 45 is also provided with flange portions 49 respectively projecting from two opposing sides of the penetration processing portion 48, said flange portions 49 extending in the diametrical direction of the cylindrical workpiece 41.

The cylindrical workpiece 41 is positioned and set in the processing machine 42 in such a manner that the cylindrical workpiece 41 is fit in the catching grooves 46,46 and thus sandwiched by the upper die 43 and the lower die 44. Then, in this state, the press jig 45 is lowered through the insertion hole 47 of the upper die 43 so that the through hole 31 is formed by the aforementioned end of the penetration processing portion 48. The press jig 45 is then lowered further so that the flange portions 49,49 bend the corresponding edges of the through hole 31 inward, thereby forming the bent portions 32,32. The distance by which the press jig 45 can be moved vertically is controlled so that the slanted face 33 of each bent portion 32 has a given width.

Formation of the through hole 31 results in slight deformation of the cylindrical workpiece 41. Therefore, after the through hole 31 and the bent portions 32,32 are formed, the cylindrical workpiece 41 is set in a cutting machine provided with a cutting blade 35 in order to compensate for the deformation. By rotating the cylindrical workpiece 41 in the state where the cutting blade 35 is in contact with the cylindrical outer surface of the cylindrical workpiece 41, the cutting blade 35 moves in the opposite direction as a result of the rotation of the cylindrical outer surface of the cylindrical workpiece 41 and performs finish cutting of the cylindrical outer surface. Thus formation of the steering column tube 5 is completed.

When the finish cutting is performed, the edges of the through hole 31 extending in such a direction as to intersect the circumferential direction, in which the cutting blade 35 moves as a result of the rotation of the cylindrical workpiece 41, are not on the locus of movement of the cutting blade 35, because said edges have been bent inward beforehand and are located inside the outline of the cylindrical workpiece 41, along which the cutting blade 35 moves. In other words, the bent portion 32 whose end faces towards the approaching cutting blade 35 prevents the cutting blade 35 from abutting against the edge of the. through hole 31, i.e. the edge facing towards the approaching cutting blade 35, thereby protecting the cutting blade 35 from otherwise possible damage. As a result, the life span of the cutting blade 35 is increased, and reliable finish cutting of the cylindrical outer surface of the cylindrical workpiece is ensured. Meanwhile, the bent portion 32 whose end faces away from the cutting blade 35 prevents such a burr 54 as shown in Fig. 9 from being formed alohg the edge of the through hole 31. As there is no need of processing work to remove a burr 54, the manufacturability of the cylindrical member is improved.

As described above, according to the present embodiment, bent portions 32,32 are formed by bending inward two edges of the through hole 31, i.e. the edges respectively face towards and away from the approaching cutting blade 35, so that the distance between each slanted face 33, which is formed on the outer surface of each respective bent portion 32 and continues from the edge of the through hole 31, and the center of the steering column tube 5 is shorter than the radius of the steering column tube 5. Therefore, the bent portion 32 whose end faces towards the approaching cutting blade 35 prevents the cutting blade 35 from abutting against said edge, thereby protecting the cutting blade 35 from otherwise possible damage and consequently increasing the life span of the cutting blade 35 as well as enabling the reliable finish cutting of the cylindrical outer surface of the cylindrical workpiece. Meanwhile, the bent portion 32 whose end faces away from the cutting blade 35 prevents a burr 54 from being formed along the edge, thereby eliminating the need of processing work to remove a burr 54 and consequently improving the manufacturability of the cylindrical member.

As each bent portion 32 is formed by press working, the bent portion itself and its vicinity are hardened and made stronger as a result of the process working.

Furthermore, when the through hole 31 is formed through the wall of the cylindrical workpiece 41, the bent portions 32 are formed with a single action by using a press jig 45 that has flange portions 49. Therefore, a steering column tube 5 can easily be produced with improved manufacturability, in other words without the danger of damage to the cutting blade 35.

Although the invention is explained as above referring to the embodiment that includes a steering column tube 5, the invention is applicable to any tubular or solid cylinder or column as long as it has a generally cylindrical outer surface.

Although the embodiment described above has a rectangular through hole 31, the through hole may have any other shape, examples of which include such other polygonal shapes as a triangle or a pentagon, as well as a circle, an oval, and other non-standard shapes, such as a star.

Furthermore, according to the embodiment described above, the bent portions 32,32 are respectively formed along the two opposing edges of the through hole 31 which extend in such a direction as to intersect the moving course of the cutting blade 35. However, other structures are also permissible; for example, it is also possible to form a bent portion 32 on only one of the two edges, or a bent portion 32 may be formed also along either one of or both edges that extend in parallel with the moving course of the cutting blade 35. The structure where a bent portion 32 is formed along the edge of the through hole 31 which faces toward the approaching cutting blade 35 is capable of preventing the cutting blade 35 from abutting against said edge, thereby protecting the cutting blade 35 from otherwise possible damage and consequently increasing the life span of the cutting blade 35 as well as enabling the reliable finish cutting of the cylindrical outer surface of the cylindrical workpiece. The structure where a bent portion 32 is formed along the edge of the through hole 31 which faces away from the cutting blade 35 is capable of preventing a burr 54 from being formed along the edge of the through hole 31, thereby eliminating the need of processing work to remove a burr 54 and consequently improving the manufacturability of the cylindrical member.

In the embodiment explained above, each bent portion 32 is formed by bending an edge of the through hole 31. However, the same effect can be achieved without bending the edge of the through hole 31; for example, it is sufficient to merely form slanted portions 33 by press working or cutting work in such a manner that each slanted portion 33 continuously extends from an end of the through hole 31 as shown in Fig. 7, with the distance between the slanted face 33 and the center of the steering column tube 5 being shorter than the radius of the steering column tube 5. To be more specific, the structure where a slanted face 33 is formed along the edge that faces toward the approaching cutting blade 35 is capable of preventing the cutting blade 35 from abutting against said edge, thereby protecting the cutting blade 35 from otherwise possible damage and consequently increasing the life span of the cutting blade 35 as well as enabling the reliable finish cutting of the cylindrical outer surface of the cylindrical workpiece. The structure where a slanted face 33 is formed along the edge that faces away from the cutting blade 35 is capable of preventing a burr 54 from being formed along the edge of the through hole 31, thereby eliminating the need of processing work to remove a burr 54 and consequently improving the manufacturability of the cylindrical member.

The embodiment described above has a through hole 31. However, an example of alternative embodiments is shown in Fig. 8, wherein a recess 50 that is open outward is provided, and slanted faces 33 are formed along two of the edges of the recess 50, with the distance between each slanted face 33 and the center of the steering column tube 5 being shorter than the radius of the steering column tube 5. The structure shown in Fig. 8 can achieve the same effects as those of the other embodiments mentioned above. To be more specific, the structure where a slanted face 33 is formed along the edge that faces toward the approaching cutting blade 35 is capable of preventing the cutting blade 35 from abutting against said edge, thereby protecting the cutting blade 35 from otherwise possible damage and consequently increasing the life span of the cutting blade 35 as well as enabling the reliable finish cutting of the cylindrical outer surface of the cylindrical workpiece. The structure where a slanted face 33 is formed along the edge that faces away from the cutting blade 35 is capable of preventing a burr 54 from being formed along said edge of the recess 50, thereby eliminating the need of processing work to remove a burr 54 and consequently improving the manufacturability of the cylindrical member.

In any one of the embodiments described above, finish cutting is performed by rotating the cylindrical workpiece 41 so that the cutting blade 35 passively moves along the cylindrical outer surface of the cylindrical workpiece 41 in the direction opposite to the active rotation of the cylindrical outer surface of the cylindrical workpiece 41. However, finish cutting may also be performed by moving the cutting blade 35 in circular motion while the cylindrical workpiece 41 is immovably secured, or rotating both the cylindrical workpiece 41 and the cutting blade 35 in opposite directions. Furthermore, the cutting work may be performed for other purposes than finishing work.

As described above, it does not matter whether the hole is an aperture, i.e. a through hole, or merely a recess.

### POSSIBLE INDUSTRIAL APPLICATION

As described above, a cylindrical member having a hole according to the present invention may be used as, for example, a steering column tube which is a part of a steering structure and functions to support a steering main shaft in the body of an automobile in the state where the steering main shaft is rotatably inserted through the steering column tube, with a pair of snap rings respectively fitted around the two opposing ends of the steering main shaft.

## Claims

1. A cylindrical member having a hole, said cylindrical member including:
a body portion having a generally cylindrical outer surface which is subject to cutting work by a cutting blade;
a hole formed in the cylindrical outer surface of said body portion; and
one or more slanted faces formed on the cylindrical outer surface of the body portion, each of which slanted surfaces is integrally formed with one of the hole edges extending in such a direction as to intersect the circumferential direction and facing either toward or away from the approaching cutting blade, and is located such that the distance between the slanted face and the center of said body portion is shorter than the radius of the body portion.

2. A cylindrical member having a hole, which member is in a generally cylindrical shape and has a cylindrical outer surface provided with a through hole formed therein and is subject to cutting work by a cutting blade, wherein:
at least one of the through hole edges that extend in such a direction as to intersect the circumferential direction and face either toward or away from the approaching cutting blade, is bent inward.

3. A method of processing a cylindrical member having a hole, said method comprising:
forming a hole in the outer surface of a cylindrical workpiece, which surface has a generally cylindrical shape;
forming at least one slanted face on said outer surface of the cylindrical workpiece in which said hole is formed, said slanted face being formed such that it is an integral body with one of the hole edges which extend in such a direction as to intersect the circumferential direction and that the distance between the slanted face and the center axis of said cylindrical workpiece is shorter than the radius of the cylindrical workpiece; and
after formation of said slanted face or slanted faces, performing cutting work of the cylindrical outer surface of the cylindrical workpiece in such a manner that a cutting blade moves either actively along the cylindrical outer surface of the cylindrical workpiece or passively as a result of rotation of the cylindrical workpiece.

4. A method of processing a cylindrical member having a hole, said method comprising:
forming a through hole through the wall of a generally cylindrical workpiece;
bending inward at least one of the through hole edges that extend in such a direction as to intersect the circumferential direction and face either toward or away from the approaching cutting blade; and
performing cutting work of the cylindrical outer surface of the cylindrical workpiece, in which said through hole having at least one of its edges bent inward is formed, said cutting work performed in such a manner that a cutting blade moves either actively along the cylindrical outer surface of the cylindrical workpiece or passively as a result of rotation of the cylindrical workpiece.
